# EUROPEAN PATENT APPLICATION

(11) **EP 3 599 462 A1**
(43) Date of publication of application: **29.01.2020**
(21) Application number: 19187934.5
(22) Date of filing: 23.07.2019
(51) Int. Cl.: G01N 27/62, G01N 27/64

(54) **PLANAR ION SOURCES FOR ION-MOBILITY SPECTROMETERS**

(30) Priority: 23.07.2018 US 201816042771
(71) Applicant: Hamilton Sundstrand Corporation, Charlotte, NC 28217-4578 (US)
(72) Inventor: EICEMAN, Gary, Las Cruces, NM New Mexico 88005 (US); GARDENER, Benjamin D., Colton, CA California 92324 (US); NIU, Hsien-Chi W., Rowland Heights, CA California 91748 (US)
(74) Representative: Schmitt-Nilson Schraud Waibel Wohlfrom Patentanwälte Partnerschaft mbB

(57) **Abstract**

An apparatus for separating and analyzing ions includes a detector (102), an ion drift tube (118) coupled to the detector and having a width (122), and a planar ion source (116). The planar ion source is coupled to the ion drift tube on an end of the ion drift tube opposite the detector and has a span (127) greater than or equal to the width of the ion drift tube to ionize an analyte gas and fragment the analyte gas ions prior to admittance to the ion drift tube. Chemical detectors and methods of chemical detection are also described.

## Description

### FEDERAL RESEARCH STATEMENT

This invention was made with government support from the United States Air Force under Contract No. FA8650-17-C09101. The government has certain rights in the invention.

### BACKGROUND OF THE INVENTION

### 1. Field of the Invention

The present disclosure relates to spectrometry, and more particularly to planar ion sources and ion mobility spectrometers for chemical detection devices and methods.

### 2. Description of Related Art

Chemical detection may be performed by a variety of detection instruments, such as gas chromatographs, ion mobility spectrometers, mass spectrometers, and/or differential mobility spectrometers. Many of these chemical detectors require that a chemical gas sample (the "sample gas") be ionized in an ion source prior to reaching the detection component. Ion mobility spectrometers offer certain advantages over other detection instruments, such as relatively low power requirements and small size.

One challenge with conventional ion mobility spectrometers is that size reduction e.g., miniaturization, typically reduces the ionization efficiency of the ion mobility spectrometer. Reduced ionization efficiency generally means that fewer ions are available to drive into the detector when analyzing sample gas. Since there is a level of noise present in the detector component output signal fewer ions means that the signal to noise ratio of the ion mobility spectrometer is reduced, adversely affecting detection capability. This effect can prevent miniaturization of conventional ion mobility spectrometers to a size sufficient to render the device handheld or, in some ion mobility spectrometers, portable - which can be desirable in certain chemical detection uses.

Such conventional methods and systems have generally been considered satisfactory for their intended purpose. However, there is still a need in the art for improved ion sources for ion mobility spectrometers, ion mobility spectrometers, and methods of ionizing gas samples in ion mobility spectrometers. The present disclosure provides a solution for this need.

### SUMMARY OF THE INVENTION

An apparatus for separating and analyzing ions includes a detector, an ion drift tube coupled to the detector and having a width, and a planar ion source. The planar ion source is coupled to the ion drift tube on an end of the ion drift tube opposite the detector and has a span greater than or equal to the width of the ion drift tube to ionize an analyte gas and fragment the analyte gas ions prior to admittance to the ion drift tube.

In certain embodiments the planar ion source can have a disk body. The disk body can be arranged orthogonally relative to an ion drift tube axis extending through the ion drift tube between the planar ion source and the detector. The planar ion source can be formed from nickel. A radioactive nickel coating can be disposed on a surface of the planar ion source facing the detector. The planar ion source can have a width that is about 1.5 centimeters (about 0.6 inches). The ion drift tube can have a length that is about 3.5 centimeters (about 1.4 inches). The ion drift tube can be a singular drift tube. The ion drift tube can be a first ion drift tube and a second ion drift tube can be arranged between the first ion drift tube and the detector.

In accordance with certain embodiments drift tube can be open to ambient pressure. The planar ion source can have a centrally located analyte gas port for introducing analyte gas flow into the apparatus at the center of the planar ion source. A baffle can be arranged between the planar ion source and the ion drift tube to direct analyte gas radially outward relative to an axis extending through the drift tube between the planar ion source and the detector. A buffer gas port can oppose the planar ion source to introduce a buffer gas flow into the apparatus. In accordance with further embodiments the planar ion source can have an analyte port located on a periphery of the planar ion source to introduce the analyte gas flow at the periphery of the planar ion source.

It is contemplated that, in accordance with certain embodiments, a shutter can be disposed between the planar ion source and the drift tube. Ionization of analyte gas and fragmentation of the analyte gas ions can occur in a common chamber defined between the shutter and the planar ion source, proximate the planar ion source, and prior to admittance of analyte ions and fragment ions into the drift tube. Flow of the analyte gas flow and/or the buffer gas flow can be radially outward relative to a drift cell axis extending between the detector and the planar ion source. Analyte gas introduced into the apparatus can have a residence time proximate the planar ion source of between about 2 milliseconds and about 500 milliseconds. Analyte gas introduced into the apparatus can have a residence time proximate the planar ion source of between about 500 milliseconds and about 2 milliseconds.

It is also contemplated that the apparatus can include a housing. The housing can support the drift tube, planar ion source, and the detector. The housing can be sized such that the apparatus is handheld, e.g., is about the size of the user's palm. The apparatus can include a buffer gas module. The buffer gas module can be in fluid communication with planar ion source and configured to provide a buffer gas flow of about 25 milliliters per minute (about 0.8 fluid ounces per minute). The apparatus can include an analyte gas module. The analyte gas module can be in fluid communication with the planar ion source and configured to provide an analyte gas flow of about 5 milliliters per minute (about 0.2 fluid ounces per minute). The apparatus can include a voltage electrode. The voltage electrode can be connected to the ion drift cell and configured to generate a potential of about 300 volts/centimeter in ion drift cell.

A chemical detector includes a housing with an interior. An apparatus for separating and analyzing ions as described above is supported within the interior of the housing. The housing is sized to fit within the hand of a user. The planar ion source has a width of about 1.5 centimeters (about 0.6 inches) and the drift tube has a length of about 3.5 centimeters (about 1.4 inches). Analyte gas introduced into the apparatus has a residence time proximate the planar ion source of about 500 milliseconds.

A chemical detection method, includes, at apparatus as describe above, flowing an analyte gas across the span of the planar ion source. The analyte gas is ionized and analyte gas ions are fragmented proximate the planar ion source. Once ionized and fragmented ionized analyte gas and fragmented analyte gas ions are admitting to the ion drift tube and driven to the detector to generate a signal indicative of composition of the analyte gas.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Figs. 1A and 1B are a partial cross-sectional view of an exemplary embodiment of a chemical detector constructed in accordance with the present disclosure, shows an apparatus for separating and analyzing ions supported within the housing of the chemical detector;
Fig. 2 is an exploded view of the chemical detector of, showing an ion drift tube arranged between a planar ion source and a detector exploded away from the housing;
Fig. 3 is a cross-sectional view of the apparatus for separating and analyzing ions of Fig. 1, showing the ion source and detector at opposite sides of a singular ion drift tube;
Fig. 4 is a perspective view of the planar ion source of Fig. 2 according to an exemplary embodiment, showing an analyte gas port and baffle centrally located on the planar ion source;
Fig. 5 and 6 are flow rate contour maps of the apparatus of Figs. 1A and 1B, showing total gas flow rate distribution within a common ionization and fragmentation chamber prior to admittance to the ion drift according to exemplary embodiments;
Fig. 7 is a cross-sectional view of the apparatus for separating and analyzing ions of Figs. 1A and 1B, schematically showing the ion source and detector at end of a tandem ion drift tube;
Fig. 8 is a schematic view of the apparatus of Figs. 1A and 1B, showing an apparatus for separating and analyzing ions having a contiguous planar ion source; and
Fig. 9 is a block diagram of a chemical detection method, showing steps of the method according to an exemplary embodiment.

### DETAILED DESCRIPTION OF THE PREFERRED EMBODIMENTS

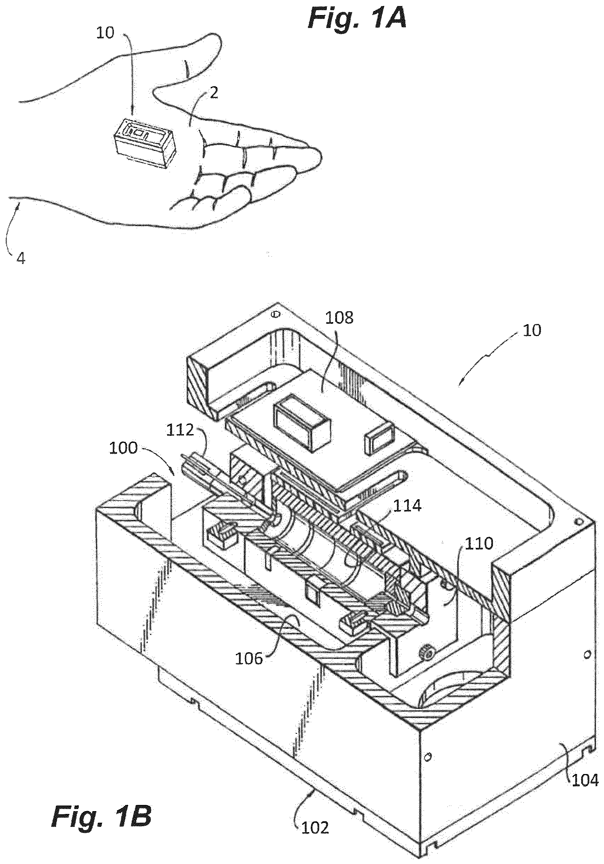

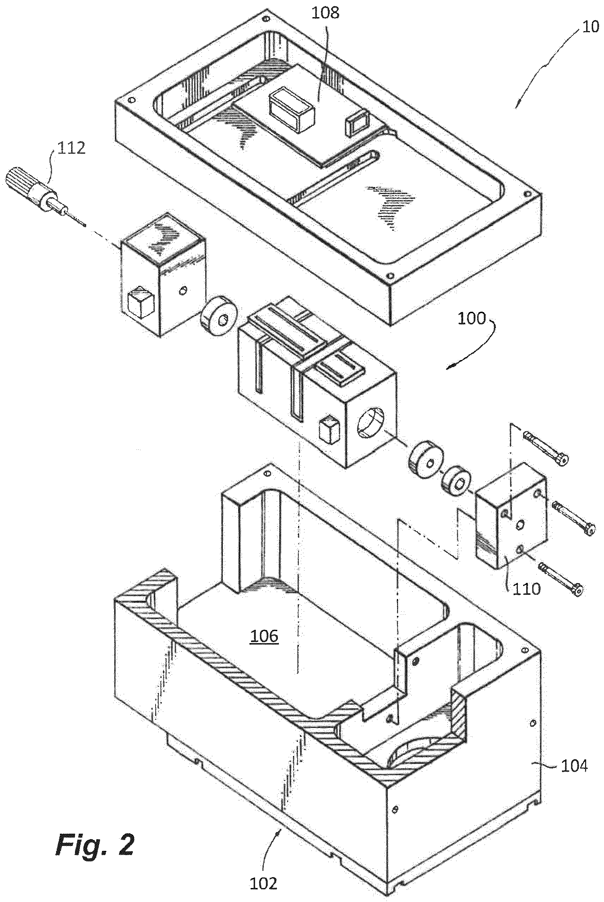

Reference will now be made to the drawings wherein like reference numerals identify similar structural features or aspects of the subject disclosure. For purposes of explanation and illustration, and not limitation, a partial view of an exemplary embodiment of an apparatus for separating and analyzing ions in accordance with the disclosure is shown in Figs. 1A and 1B, and is designated generally by reference character 100. Other embodiments of an apparatus for separating and analyzing ions, chemical detectors having an apparatus for separating and analyzing ions, and chemical detection methods in accordance with the disclosure, or aspects thereof, are provided in Figs. 2-9, as will be described. The systems and methods described herein can be used for ion mobility spectrometers, such as ion mobility spectrometers for handheld chemical detectors, though the present disclosure is not limited to handheld chemical detectors nor to ion mobility spectrometers in general.

Referring to Figs. 1A and 1B, a chemical detector 10 is shown. Chemical detector 10 includes a housing 104 with an interior 106, apparatus 100 for separating and analyzing ions, and detection electronics 108. Chemical detector 10 also includes a buffer gas module 110, an analyte gas module 112, and a voltage electrode 114. Housing 104 is sized such that chemical detector 102 can be handheld, i.e., can fit within the palm of the hand 2 of a user 4. Apparatus 100, e.g., an ion mobility spectrometer, is arranged within interior 106 of housing 104. In this respect one or more of a planar ion source 116 (shown in Fig. 2), an ion drift tube 118 (shown in Fig. 2), and a detector 120 (shown in Fig. 2) are supported by housing 104. In certain embodiments interior 106 of chemical detector 102 is in equilibrium with the environment external of housing 104, pressure within interior 106.

With reference to Fig. 2, chemical detector 102 is shown is shown in an exploded view. Detection electronics 108 is disposed in communication with detector 120 and is configured to generate signal representative of ion and fragment ion impacts on chemical detector 102. Voltage electrode 114 is connected to ion drift tube 118 for generating an electric field in ion drift tube 118 from driving ions and fragment ions through ion drift tube 118 to detector 120. As will be appreciated by those of skill in the art in view of the present disclosure, a voltage potential is applied across an end to ion drift tube and detector, the detector connected ground. A voltage divider creates a voltage gradient along the length of the ion drift tube by applying a reduced voltage to each electrode in the direction of the detector, thereby creating the electric field. In certain embodiments voltage electrode 114 is configured to apply a voltage of between about 1000 volts to about 3000 volts to ion drift tube 118. Voltages in this range can provide an electric field suitable for separation of ions based on ion mobility. In accordance with certain embodiments electrode 114 is configured to apply about 300 volts to ion drift tube 118.

Buffer gas module 110 is in fluid communication with apparatus 100. In this respect buffer gas module is 110 is configured to provide a buffer gas flow 12 to apparatus 100 directed towards planar ion source 116. In certain embodiments buffer gas flow 12 is between about 10 milliliters per minute and about 40 milliliters per minute. Buffer gas flow rates within this range can provide effective collisions with analyte molecules and ions. It can also ensure that molecule and ions spend sufficient time proximate the ionization region to affect ionization and fragmentation.

Analyte gas module 112 is in fluid communication with apparatus 100. More particularly analyte gas module is 112 is configured to provide an analyte gas flow 14 to apparatus 100 directed towards planar ion source 116. In certain embodiments analyte gas flow 14 is between about 2 milliliters per minute and about 20 milliliters per minute. Analyte gas flows within this range can provide effective mixing with the buffer gas. It can also cause the molecules and ions to spend sufficient time in front of the ionization region to affect ionization and fragmentation. As will be appreciated by those of skill in the art in view of the present disclosure, analyte gas from cooperates with buffer gas flow to control the residence time of the molecules and ions in front of the ionization region. In accordance with certain embodiments analyte gas flow 14 is about 10 milliliters per minute.

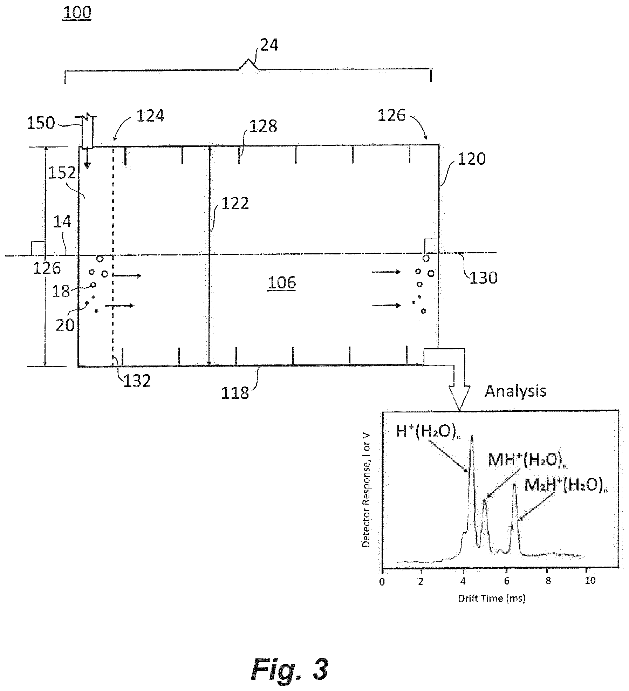

With reference to Fig. 3, apparatus 100 is shown. Apparatus 100 includes planar ion source 116, ion drift tube 118, and detector 120. Ion drift tube 118 is coupled to detector 120 and has a width 122. Planar ion source 116 is coupled to ion drift tube 118 on a planar ion source end 124 of ion drift tube 118 opposite detector 120 and has a span 127 equal to or greater than width 122 of ion drift tube 118 to ionize molecules of an analyte gas flow 14 and fragment ions of analyte gas flow 14 into analyte gas fragment ions 16 prior to entry into ion drift tube 118.

Ion drift tube 118 has a planar ion source end 124 and a detector end 126. Between detector end 126 and planar ion source end 124 ion drift tube 118 includes a plurality of annular electrodes 128. The plurality of annular electrodes 128 are axially stacked with on another along a drift tube axis 130 extending between planar ion source end 124 and detector end 126. The plurality of annular electrodes 128 are in electrical communication with voltage electrode 114 (shown in Fig. 2) for generating a electric field within ion draft tube 118. The electric field is of strength and polarity sufficient to drive analyte gas ions 18, and analyte gas fragment ions 20, along drift tube axis 130 to impact detector 120 once admitted to ion drift tube 118. It is contemplated that ion drift tube 118 have an axial length that is between about 2 centimeters and about 10 centimeters. Axis lengths within this size range can provide compactness in comparison to alternative arrangements, limiting size of housing 104 (shown in Fig. 2) and facilitating miniaturization of apparatus 100. In certain embodiments ion drift tube 118 has an axial length that is about 3.5 centimeters (about 1.4 inches).

A shutter 132 is disposed within an interior 134 of ion drift tube 118 between planar ion source end 124 and detector end 126 to admit analyte gas ions 18 and analyte gas fragment ions 20 into interior 134 of ion drift tube 118. Shutter 132 is operably associated with detector electronics 108 (shown in Fig. 1B). In certain embodiments ion drift tube 118 arranged for retaining pressure substantially equivalent to external environment 10, for example by being open (i.e., in fluid communication) with external environment 10, which simplifies the arrangement and facilitates miniaturization of apparatus 100 eliminating the need for seals and other associated isolation structures.

Detector 120 is arranged along drift tube axis 130 at a detector end 126 of ion drift tube 118 and is disposed in communication with detection electronics 108 (shown in Fig. 3) for generating signal 22. Signal 22 is indicative of analyte gas ions 18 and analyte gas fragment ions 20 impacting detector 120. In the illustrated exemplary embodiment shown in Fig. 3 detector 120 is orthogonal relative to drift tube axis 130. Arrangement of detector 120 orthogonally relative drift tube axis 130 provides compactness in comparison to alternative arrangements, and limit size of housing 104 (shown in Fig. 2) and facilitating miniaturization of apparatus 100.

Planar ion source 116 is arranged at planar ion source end 124 of ion drift tube 118 such that ion drift tube 118 is arranged between planar ion source 116 and detector 120, planar ion source 116 spanning width 122 of ion drift tube 118, with radioactive coating 138 opposing shutter 132. As shown in Fig. 3 planar ion source 116 is arranged substantially orthogonal relative to drift tube axis 130. Arranging planar ion source 116 orthogonally relative to drift tube axis 130 similarly provides compactness in comparison to alternative arrangements, and limit size of housing 104 (shown in Fig. 2) and facilitating miniaturization of apparatus 100.

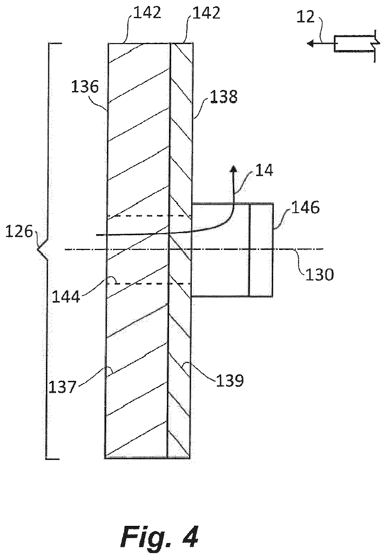

With reference to Fig. 4, planar ion source 116 is shown. Planar ion source 116 includes a disk body 142 and a base 136 with a radioactive coating 138, and is arranged along drift tube axis 130 opposite detector 120. Although described herein as having a radioactive coating those of skill in the art will appreciate that other ionization methods could also be used, such as soft x-ray by way of non-limiting example.

Disk body 142 has an analyte gas port 144 with a baffle 146, is arranged orthogonally relative to drift tube axis 130, and defines span 127, which as shown corresponds to the diameter of disk body 142. It is contemplated that span 127 be between about 0.5 centimeters and about 2.5 centimeters. Spans within this size range can provide compactness in comparison to alternative arrangements, limiting the size of housing 104 (shown in Fig. 2) and facilitating miniaturization of apparatus 100. In certain embodiments span 127 of planar ion source 116 is about 1.5 centimeters (about 0.6 inches), which Applicant has determined provides sufficient surface area to generate, in cooperation with fluid flow across planar ion source 116, analyte gas ions 18 (shown in Fig. 3) and analyte gas fragment ions 20 (shown in Fig. 3) in sufficient density to enable suitable detection sensitivity. Although shown an described herein as being a circular disk it is to understood and appreciated that planar ion sources having non-circular shapes can also be employed.

Analyte gas port 144 is in fluid communication with analyte gas module 112 (shown in Fig. 1B) and is centrally located for introducing analyte gas flow 14 into interior 106 of apparatus 100 at the center of planar ion source 116. Baffle 146 is arranged between planar ion source 116 and ion drift tube 118 (shown in Fig. 3) to direct analyte gas flow 14 radially outward relative to drift tube axis 130. It is contemplated that baffle 146 be supported by standoffs connected to planar ion source 116 and extending between baffle 146 and planar ion source 116. A buffer gas port 148 opposes planar ion source 116 to introduce buffer gas flow 12 into apparatus 100 in a direction opposing planar ion source 116, buffer gas module 110 being in fluid communication with buffer gas module 110 (shown in Fig. 1B) for this purpose. In the illustrated exemplary embodiment baffle 146 has a baffle span which is greater than a width of the flow area of analyte gas port 144, a dimension which can be selected to produce overlap between baffle 146 and radioactive coating 140 such that the increase ionization efficiency from the radial re-direction of analyte gas flow 14 outweighs any the decrease in ionization efficiency resultant from the partial shading of planar ion source 116 by baffle 146.

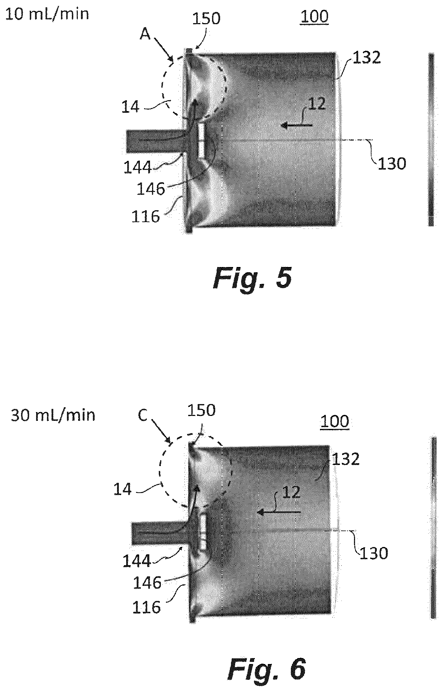

Referring to Figs. 5 and 6, flow maps of fluid flow within apparatus 100 are shown according to exemplary embodiments. Applicants have determined that, with selection of suitable buffer gas mass flow rate and analyte gas mass flow rate, molecules and ions can be resident in the proximity of radioactive coating 138 for a time interval sufficient to provide ionization efficiency otherwise not possible with similarly sized spectrometers. Applicants believe that the extended residence time achievable with selected suitable mass flow rates allow for ionization of relatively large numbers of the molecules present in analyte gas flow 14. For example, in certain embodiments, analyte gas residence times of between 2 milliseconds and about 500 milliseconds can be selected. Alternatively, in accordance with certain embodiments, , analyte gas residence times of between 500 milliseconds and about 2 seconds can be selected. Further, the extended residence time provides sufficient time for analyte gas ions to fragment into smaller distinctive pieces of the analyte, these fragments providing additional information for identification of analyte gas flow 14 prior to admission (through shutter 132) into interior 106 of ion drift tube 118 and arrival at detector 120.

Planar ion source 116 and shutter 132 define between one another a separation and fragmentation chamber 152 into which analyte gas flow 14 and buffer gas flow 12 are introduced through analyte gas port 144 and buffer gas port 148. As indicated by the mass flow rate contour lines in Figs. 5 and 6, gas residence time proximate to radioactive coating 140 can be modulated by mass flow rate selected, selection of mass flow resulting in relatively high residence times, e.g., upwards of 50 times the ion mobility spectrometer drift time. High residence time in turn ensures that ionization efficiency is maximized and sufficient time is available for subsequent ion fragmentation, but that the residence time is not so high as to degrade the transient characteristics of the analyte delivery system.

Analyte gas flow 14 enters from the left side of separation and fragmentation chamber 152 (relative to the drawing) through analyte gas port 144 at relatively high velocity. Buffer gas flow 12 enters from the right side of separation and fragmentation chamber 152 as a countercurrent opposing analyte gas flow 14 through analyte gas port 144. As analyte gas flow 14 traverses disk body 142 of planar ion source 116 analyte gas flow 14 encounters baffle 146, which redirects analyte gas flow 14 radially outward (relative to drift tube axis 130). As the radially redirected analyte gas flow 14 travels radially outward and in proximity of radioactive coating 140 analyte gas flow 14 intermixes with buffer gas flow 12, velocity of flow of intermixed analyte gas flow 14 and buffer gas flow 12 slowing according to the aggregate of the mass flow rate of analyte gas for 14 and mass flow rate of buffer gas flow 12. It is contemplated that ionization of analyte gas and fragmentation of the analyte gas ions can occur in a common chamber defined between the shutter and the planar ion source, proximate the planar ion source, and prior to admittance of analyte ions and fragment ions into the drift tube.

As shown in Fig. 5, at an aggregate flow rate of 10 milliliters per minute generates a residence time of about two (2) seconds is achieved in proximity to planar ion source 116, shown with reference letter A. Residence times of about two (2) seconds are sufficient for chromatograph analyte generator (not shown) to deliver separated analyte compounds sequentially, separated in time, such that the respective compounds can be ionized and driven into the detector prior to arrival of the successor sample.

It is contemplated that the residence time the analyte gas source spend in proximity to ion source 106 be selected by adjustment of the aggregate flow rate of analyte gas and/or buffer gas into the ion mobility spectrometer. For example, as shown in Fig. 6, increasing the aggregate flow rate to 30 milliliter per minute (about 1 fluid ounce per minute) results in decreased residence time in proximity to ion source 106 relative to the flow rate shown in Fig. 5, which may be more appropriate in certain detection and analysis application. In the exemplary flow map shown in Fig. 6 about 5 milliliters per minute of analyte gas flow 14 and about 25 milliliters per minute buffer gas flow 12 cooperate generate a flow rate of about 15 millimeters per second (about 0.6 inches per second), ionization and ion fragmentation occurring as the aggregate gas flow traverses the surface of ion source 106 between the baffle and outlet. Speeds of around 15 millimeters per second can provide a residence time of about 500 milliseconds in proximity to planar ion source 116, shown with reference letter C. Notably, Applicants have determined that ionization efficiency can be such that a singular drift tube 24 (shown in Fig. 3) can be employed in apparatus 100. Such singular drifts tubes can provide compactness in comparison to tandem drift tube arrangements, thereby limiting size of housing 104 (shown in Fig. 2) and facilitating miniaturization of apparatus 100.

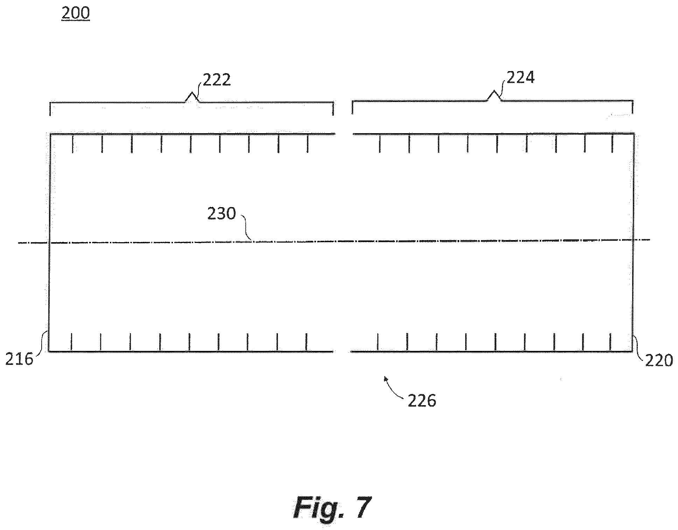

Alternatively, as shown in Fig. 7, planar ion sources as described herein can be employed in a tandem ion drift tube arrangement 226. In this respect an apparatus 200 is shown. Apparatus 200 is similar to apparatus 100 (shown in Fig. 1A) and includes planar ion source 216, detector 220, a first drift tube 222, and a second drift tube 224. Planar ion source 216, first ion drift tube 222, second ion drift tube 224, and detector 220 are each arranged along drift tube axis 230, second ion drift tube 224 being arranged axially between first ion drift tube 222 and detector 220. As will be appreciated by those of skill in the art in view of the present disclosure, apparatus 200 and tandem drift tube arrangement 226 can provide added ionization efficiency through added volume for ion fragmentation, allowing apparatus 200 to be employed spectroscopy applications outside of ion mobility spectrometry.

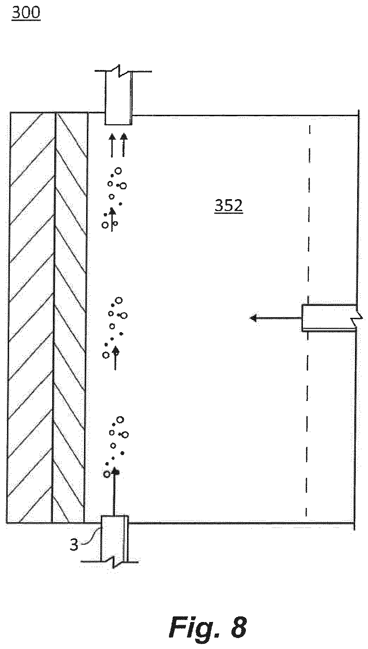

With reference to Fig. 8, an apparatus 300 for ionizing and fragmenting ions is shown. Apparatus 300 is similar to apparatus 100 (shown in Fig. 3) and additional includes a planar ion source 316. Planar ion source 316 is similar to planar ion source 116 (shown in Fig. 3) and is additionally contiguous. In this respect planar ion source 316 includes no analyte gas port centrally located on disk body 342. Planar ion source 316 instead has a peripheral analyte gas port 344 located at a periphery 354 of planar ion source 316. As will be appreciated by those of skill in the art in view of the present disclosure, planar ion source 316 provides greater analyte gas travel distance relative to planar ion source 116, facilitating miniaturization of apparatus 300.

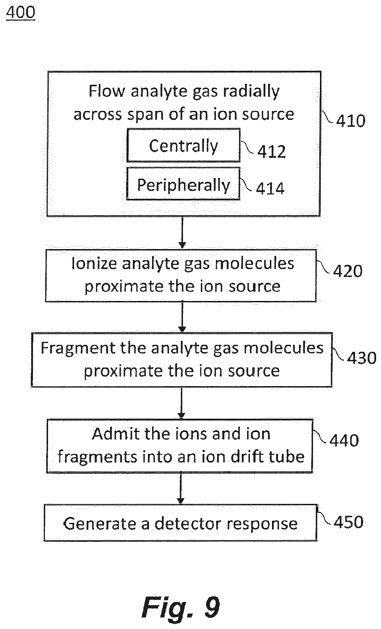

Referring to Fig. 9, a chemical agent detection method 400 is shown. Method 400 includes flowing an analyte gas radially across a planar ion source, e.g., analyte gas flow 14 (shown in Fig. 3) across planar ion source 116 (shown in Fig. 3), as shown with box 410. It is contemplated that the analyte gas traverse the span of the planar ion source, e.g., span 127, as also shown with box 410. The analyte gas flow can be introduced centrally, e.g., through analyte gas port 144 (shown in Fig. 4) It is also contemplated that the analyte gas flow can be introduced peripherally, e.g., through a peripheral analyte gas port 344 (shown in Fig. 5).

As the analyte gas flow traverses the span of the planar ion source the analyte gas molecules are ionized, as shown with box 420. In addition, due the relatively long residence time possible with the planar ion source, at least a portion of the ionized molecules are fragmented, as shown with box 430. The fragmentation can be, for example, by a protracted period of residency in proximity to the planar ion source associated with the radial direction of the analyte gas flow across the planar ion source. The analyte gas molecule ions, and analyte gas molecule fragment ions are thereafter admitted to a drift tube, e.g., singular ion drift tube 118 (shown in Fig. 3) or tandem ion drift tubes of tandem drift tube arrangement 226 (shown in Fig. 7), as shown with box 440. Once admitted to the drift tube the analyte gas molecule ions, and analyte gas molecule fragments are driven to a detector, producing a detector response signal, e.g., signal 22 (shown in Fig. 3), indicative of the composition of the analyte molecules, as shown with box 450.

Ion mobility spectrometers are powerful detectors for chemical materials and offer certain advantages over other technologies due to their small size and low power requirements. However, when ion mobility spectrometers are miniaturized they generally exhibit reduced detection capability. This is typically a consequence of a reduction of ionization efficiency and ion fragmentation of the molecules being analyzed, and a corresponding reduction in the information available for chemical identification.

In embodiments described herein planar ion sources with source geometry are disclosed with geometry that provides relative high ionization efficiency in a miniaturized form. In certain embodiments the geometry of the planar ion source is planar, providing relatively high ionization efficiency in comparison to alternative planar ion sources, such as cylindrical planar ion sources. Compared to other ion sources, ion sources described herein can provide a large radiating surface area. Further, analyte and/or buffer gas flows can be reduced to increase exposure time of the analyte to the ion source, potentially resulting in relatively large number of ions being generated from the analyte as the analyte traverses the ion source and improves the limits of detection and information generated.

It is also contemplated that planar ion sources described herein provide increased fragmentation of the ions thus generated. As a consequence of the relative high ionization, efficiency relatively large amounts of information can be provided for analyte identification. In accordance with certain embodiments information can be provided in sufficient quantity and quality for detection of chemical agents and materials, such as in chemical weapons.

The methods and systems of the present disclosure, as described above and shown in the drawings, provide for planar ion sources, apparatus for separating and analyzing ions, and chemical detection methods with superior properties including high ionization efficiency in a compact (e.g., handheld) arrangement. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. An apparatus for separating and analyzing ions, comprising:
a detector (102);
an ion drift tube (118) coupled to the detector and having a width (122); and
a planar ion source (116) coupled to the ion drift tube on an end of the ion drift tube opposite the detector, wherein the planar ion source has a span (127) that is equal to or greater than the width (122) of the ion drift tube to ionize an analyte gas and fragment the analyte gas ions proximate the planar ion source and prior to admittance to the ion drift tube.

2. The apparatus as recited in claim 1, wherein the planar ion source has a disk body (142).

3. The apparatus as recited in claim 1 or 2, wherein the planar ion source is formed from nickel and comprises a radioactive nickel coating (138) disposed on a surface facing the ion drift tube.

4. The apparatus as recited in any preceding claim, wherein the planar ion source has a centrally located analyte port for introducing analyte gas flow into the apparatus at the center of the planar ion source, or wherein the planar ion source has an analyte port located on a periphery of the planar ion source to introduce analyte gas flow at the periphery of the planar ion source.

5. The apparatus as recited in any preceding claim, further comprising a baffle (146)) arranged between the planar ion source and the ion drift tube to direct analyte gas radially outward relative to an axis extending through the drift tube between the planar ion source and the detector.

6. The apparatus as recited in any preceding claim, further comprising
a buffer gas port (148) opposing the planar ion source to introduce a buffer gas flow into the apparatus; or
a buffer gas module in fluid communication with the planar ion source and configured to provide a buffer gas flow of about 5 milliliters per minute (about 1 fluid ounce per minute);
an analyte gas module (112) in fluid communication with the planar ion source and configured to provide a buffer gas flow (14) of about 25 milliliters per minute (about 0.8 fluid ounce per minute); and
a voltage electrode connected to the ion drift cell and configured to apply about 300 volts/centimeter to the ion drift cell.

7. The apparatus as recited in any preceding claim, further comprising a shutter (132)) disposed between the planar ion source and the drift tube, the shutter and planar ion source defining between one another a common chamber for ionization of analyte gas and fragmentation of the analyte gas ions proximate the planar ion source and prior to admittance of analyte ions and fragment ions into the drift tube, and preferably wherein analyte gas flow and buffer gas flow in the separation chamber is radially-directed relative to a drift cell axis extending between the detector and the planar ion source.

8. The apparatus as recited in any preceding claim, wherein the apparatus includes only a single ion drift tube disposed between the detector and the planar ion source.

9. The apparatus as recited in any preceding claim, wherein the planar ion source has a width of about 1.5 centimeters (0.6 inches) and the drift tube has a length of about 3.5 centimeters (about 1.4 inches).

10. The apparatus as recited in any preceding claim, wherein the ion drift tube is a first ion drift tube (222) and further comprising a second ion drift tube (224), the second ion drift tube arranged between the first ion drift tube and the detector.

11. The apparatus as recited in any preceding claim, further comprising a housing (104) supporting at least one of the drift tube, the planar ion source, and the detector, wherein the housing is sized to fit within the palm a user's hand.

12. A chemical detector, comprising:
a housing (104) with an interior; and
an apparatus for separating and analyzing ions as claimed in any preceding claim arranged within the interior of the housing,
wherein the planar ion source has a width of about 1.5 centimeters and the drift tube has a length of about 3.5 centimeters (about 1.4 inches),
wherein analyte gas introduced into the apparatus has a residence time proximate the planar ion source of about 500 milliseconds, and
wherein the housing is sized to fit within a palm of a user's hand.

13. A chemical detection method, comprising:
at apparatus for separating and analyzing ions including an detector, an ion drift tube coupled to the detector and having a width, and a planar ion source coupled to the ion drift tube on an end of the ion drift tube opposite the detector with span equal or greater than the width of the drift tube,
flowing an analyte gas across the span of the planar ion source;
ionizing and fragmenting the analyte gas proximate the planar ion source;
admitting the ionized and fragmented analyte gas into the drift tube; and
driving the ionized and fragmented analyte gas to the detector to generate a signal indicative of composition of the analyte gas.

14. The chemical detection method as recited in claim 13, further comprising selecting residence time at the ion source by selecting an analyte gas flow rate.

15. The chemical detection method as recited in claim 13, wherein residence time is between about 2 milliseconds and about 500 milliseconds, or wherein residence time is between about 500 milliseconds and about 2 seconds.
